(19) Europäisches Patentamt
European Patent Office
Office européen des brevets

(11) **EP 4 159 312 A1**

(12) **EUROPEAN PATENT APPLICATION**
published in accordance with Art. 153(4) EPC

(43) Date of publication:
**05.04.2023 Bulletin 2023/14**

(21) Application number: **21868422.3**

(22) Date of filing: **27.08.2021**

(51) International Patent Classification (IPC):
**B01J 23/10** (2006.01)     **B01D 53/86** (2006.01)
**B01D 53/94** (2006.01)     **B01J 23/00** (2006.01)
**F23G 7/07** (2006.01)

(86) International application number:
**PCT/CN2021/114932**

(87) International publication number:
**WO 2022/057594 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2020 CN 202010982979**

(71) Applicants:
• **Grirem Advanced Materials Co., Ltd.
Beijing 100088 (CN)**
• **Rare Earth Functional Materials (Xiong'An)
Innovation Center Co., Ltd
Baoding, Hebei 071700 (CN)**
• **Grirem Hi-Tech Co., Ltd.
Langfang, Hebei 065201 (CN)**

(72) Inventors:
• **HUANG, Xiaowei
Beijing 100088 (CN)**

• **HOU, Yongke
Beijing 100088 (CN)**
• **ZHAO, Zheng
Beijing 100088 (CN)**
• **ZHANG, Yongqi
Beijing 100088 (CN)**
• **YANG, Juanyu
Beijing 100088 (CN)**
• **CUI, Meisheng
Beijing 100088 (CN)**
• **ZHAI, Zhizhe
Beijing 100088 (CN)**
• **XU, Yang
Beijing 100088 (CN)**
• **FENG, Zongyu
Beijing 100088 (CN)**
• **CHEN, Shilei
Beijing 100088 (CN)**

(74) Representative: **Huang, Liwei
Cäcilienstraße 12
40597 Düsseldorf (DE)**

(54) **CERIUM-ZIRCONIUM-BASED COMPOSITE OXIDE HAVING GRADIENT ELEMENT DISTRIBUTION AND PREPARATION METHOD THEREFOR**

(57)     The present invention relates to a cerium-zirconium-based composite oxide having gradient element distribution and a preparation method therefor. According to the present invention, the cerium-zirconium-based composite oxide having gradient element distribution is prepared by a step-by-step precipitation method. First, a zirconium-rich component is precipitated to form a crystal structure and a crystal grain stack structure which have high thermal stability, slow down the segregation of zirconium on a surface after high-temperature treatment, and reduce element migration among crystal grains; second, a cerium-rich component is precipitated to improve the cerium content of the surface layers of the crystal grains, improve the utilization rate of the cerium element, and improve the oxygen storage amount and the oxygen storage rate. The composite oxide prepared by the method has both high thermal stability and high oxygen storage performance, thus satisfying requirements of the long-time use of a catalyst containing a cerium-zirconium-based composite oxide for the thermal stability and oxygen storage performance of the cerium-zirconium-based composite oxide.

EP 4 159 312 A1

Mixed solution A          Alkaline precipitant

First precipitation

Mixed solution B          Alkaline precipitant

Second precipitation

Filter, wash

Modifier

Surface treatment

Dry, calcine

Cerium-zirconium-based
composite oxide

FIG. 1

## Description

### TECHNICAL FIELD

The present invention relates to related fields of catalysts and preparation thereof, in particular to a cerium-zirconium-based composite oxide with gradient distribution of elements that can be used in the fields of motor vehicle exhaust purification, industrial waste gas treatment, catalytic combustion, etc., and a preparation method thereof.

### BACKGROUND

In recent years, people's requirements for ambient air quality are increasingly high, the requirements of gas emission regulations for the emission of motor vehicle exhaust and volatile organic waste gas are increasingly strict, and the utilization of traditional fossil energy requires gas conversion in which cerium-zirconium-based composite oxides need to have stable structure and rapid oxygen storage and release capabilities. It is known that the thermal stability of zirconium-rich components is better than that of cerium-rich components, and the oxygen storage and release of the cerium-rich components is better than that of the zirconium-rich components. In practical use, the components of cerium-zirconium-based composite oxides that play the role of oxygen storage and release are mainly distributed in the surface layer of grains.

In order to have good thermal stability and oxygen storage and release capabilities, it is found that the core-shell structure constructed by step-by-step precipitation is beneficial to improving the sintering resistance. Patent document CN101091914B provides a method of first precipitating a zirconium salt and other rare earth metal salts except cerium, and then precipitating a cerium salt, which improves the specific surface heat resistance of a cerium-zirconium composite oxide at a high temperature (1100°C/3 h). However, due to the easy sintering of cerium on the outer layer only, the specific surface heat resistance at a high temperature is still not ideal (20-22 m$^2$/g) after heat treatment at 1100°C for 3 h. Patent document CN102883808A provides a method of first precipitating zirconium and cerium compounds, or these compounds and rare earth elements except cerium in an amount less than the amount of a desired compound to be obtained, and then precipitating remaining elements contained in the desired compound, to obtain a cerium-zirconium-based composite oxide with a specific surface area of not less than 25 m$^2$/g after calcination at 1 100°C for 4 hours. However, it is not enough to delay the segregation of elements in grains because only the doping elements are precipitated later. Phase separation occurs when the cerium-zirconium-based composite oxide is calcined at 1000°C for 4 hours, which greatly reduces the high-temperature thermal stability of cerium-zirconium materials. Patent document CN103962120A also provides a process of precipitating cerium zirconium first and then precipitating a part of yttrium and/or rare earth metal compounds, but it is limited to oxides based on zirconium, cerium and yttrium with a cerium oxide ratio between 3% and 15%, and the post-precipitated materials do not contain zirconium, so good thermal stability at a high temperature is difficult to achieve. Patent document CN107427822A provides an exhaust purification catalyst with a core-shell carrier and a preparation method thereof, where its core-shell structure is realized by a loaded coating method, elements in the core-shell structure are layered in a radial direction and there is no gradient distribution of elements; and the preparation method involves two-step synthesis, where the first step is to synthesize cores, then shells are prepared by the loaded coating method on the basis of grains of the cores, and a layered core-shell structure is formed on the inner and outer layers, so the elements are discontinuous in the radial direction and there is no gradient distribution of elements. Patent document CN103191711A provides that a precursor of a basic zirconium sulfate composite salt is synthesized first and then mixed with a cerium salt and a rare earth metal salt for precipitation to obtain a cerium-zirconium-based composite oxide, with a specific surface area of not more than 25 m$^2$/g and an oxygen storage capacity of not more than 400 $\mu$mol O$_2$/g after heat treatment at 1100°C for 3 hours, which are still low.

Therefore, it is necessary to develop a cerium-zirconium-based composite oxide with gradient distribution of elements, which can delay the segregation of elements at a high temperature, improve the utilization of cerium, maintain a stable phase structure and have a higher oxygen storage capacity after heat treatment at 1100°C.

### BRIEF SUMMARY

Based on the above situation of the prior art, the objective of the present invention is to provide a cerium-zirconium-based composite oxide with gradient distribution of elements and a preparation method thereof by which a gradient distribution of elements structure of a zirconium-rich inner layer and a cerium-rich outer layer can be constructed, where the cerium-zirconium composite oxide exhibits high thermal stability and oxygen storage and release capabilities. Moreover, it can maintain a stable crystal structure, a large specific surface area and a high oxygen storage capacity especially after being used in a high-temperature environment, and can be used in catalytic fields such as motor vehicle exhaust purification, volatile organic matter purification, natural gas catalytic combustion and steam reforming hydrocarbons.

To achieve the above objective, according to an aspect of the present invention, a cerium-zirconium-based composite oxide with gradient distribution of elements is provided, the composite oxide including a cerium element and a zirconium element, the cerium element and the zirconium element having a gradient distribution from inside to outside in grains.

Further, the content of cerium oxide on a grain surface of the composite oxide is higher than that in the overall composite oxide, the content of zirconium oxide on the grain surface is lower than that in the overall composite oxide, the content of cerium increases gradually from inside to outside along the radial direction of grains, and the content of zirconium decreases gradually from inside to outside along the radial direction of grains.

Further, the composite oxide includes the following terms represented as oxides:

10%-80% by mole of cerium oxide;

15%-80% by mole of zirconium oxide; and

0%-20% by mole of other oxides.

Further, the composite oxide includes the following terms represented as oxides:

30%-60% by mole of cerium oxide; and

30%-60% by mole of zirconium oxide.

Further, the other oxides are one or a combination of more than one of rare earth elements except cerium and non-rare earth metal elements except zirconium, the content of the other oxides in the composite oxide is 2%-15% by mole, and the content of oxides of the rare earth elements except cerium in the other oxides is 70%-100% by mole.

Further, the composite oxide contains a hafnium oxide, and the content of the hafnium oxide is 0.05%-2% by mole.

Further, the rare earth elements except cerium and the non-rare earth metal elements except zirconium include at least one or a combination of more than one of lanthanum, praseodymium, neodymium, samarium, europium, gadolinium, terbium, dysprosium, holmium, erbium, thulium, ytterbium, lutetium, scandium, yttrium, hafnium, aluminum, barium, manganese, and copper.

Further, the rare earth elements except cerium and the non-rare earth metal elements except zirconium are one or a combination of more than one of lanthanum, praseodymium, neodymium, europium, yttrium, hafnium, aluminum and manganese.

Further, the gradient distribution further includes a gradient distribution of one or more elements among the rare earth elements except cerium and/or the non-rare earth elements except zirconium, and this gradient distribution indicates that the content of elements decreases or increases gradually from inside to outside in the radial direction of grains.

Further, the gradient distribution further includes a gradient distribution of the rare earth elements except cerium, in which the content of elements increases gradually from inside to outside in the radial direction of grains.

Further, the rare earth elements except cerium and the non-rare earth metal elements except zirconium are one or a combination of more than one of lanthanum, praseodymium, neodymium, europium, yttrium, hafnium, aluminum and manganese.

Further, the composite oxide has:

a specific surface area of 55-65 $m^2/g$ after heat treatment at 1000°C in air for 4 hours; and

a specific surface area of 35-55 $m^2/g$ after heat treatment at 1100°C in air for 4 hours.

Further, the composite oxide has pores of 2 nm-100 nm, a total pore volume between 0.1 mL/g and 0.5 mL/g, and a static oxygen storage capacity of more than or equal to 500 $\mu$mol $O_2/g$.

Further, after calcination at 1100°C in air for 4 hours, the composite oxide has pores of 10 nm-30 nm, a total pore volume between 0.03 mL/g and 0.2 mL/g, and a static oxygen storage capacity of more than or equal to 400 $\mu$mol $O_2/g$.

According to a second aspect of the present invention, a preparation method of the cerium-zirconium-based composite oxide with gradient distribution of elements is provided, the preparation method being a step-by-step precipitation method, including the following steps:

(a) First precipitation step: mixing an alkaline matter with a mixed solution A including a cerium salt and a zirconium salt, or a cerium salt, a zirconium salt and one or more metal salts of optional rare earth salts except cerium and non-rare earth metal salts except zirconium, stirring and reacting to obtain a slurry containing a precipitate of the above elements;

(b) Second precipitation step: adding a mixed solution B including the cerium salt and the zirconium salt, or the cerium salt, the zirconium salt and one or more metal salts of the optional rare earth salts except cerium and non-rare earth metal salts except zirconium, at the same time adding the alkaline matter to the slurry for precipitation, filtering, washing, andadding water to adjust the slurry to obtain a precipitate slurry containing cerium and zirconium, or cerium, zirconium and other elements; and

(c) Heating the slurry obtained in step (b), adding a modifier to the slurry, filtering to obtain a cerium-zirconium-based composite precipitate, and calcining at 600°C-950°C to obtain the cerium-zirconium-based composite oxide.

Further, the zirconium in the mixed solution A is more than 50% by mole of the total zirconium content, and the cerium in the mixed solution B is more than 50% by mole of the total cerium content.

Further, the zirconium in the mixed solution A is 60%-80% by mole of the total zirconium content, and the cerium in the mixed solution B is 60%-80% by mole of the total cerium content.

Further, the salts except zirconium in the mixed solution A and the mixed solution B are one or a combination of more than one of nitrate, chloride, sulfate, and acetate.

Further, the zirconium salt in the mixed solution A and the mixed solution B is one or a combination of more than one of zirconium oxynitrate, zirconium oxysulfate, zirconium oxychloride, and zirconium acetate.

Further, the alkaline matter is one or a combination of more than one of sodium hydroxide, ammonium hydroxide, potassium hydroxide, urea, ammonium bicarbonate, sodium carbonate, and sodium bicarbonate.

Further, the mixed solution A and the mixed solution B each contain 0.2 mole to 3 moles of coordination agent ions per mole of the zirconium element, and the coordination agent ions are sulfate anions, which are provided by adding sulfuric acid or sulfate to the mixed solution A and the mixed solution B.

Further, the amount of the alkaline matter in the first precipitation step is 0.8-1.5 times the theoretical amount required for cation precipitation, and the pH value in the second precipitation step needs to be controlled within a preset range.

Further, the ratio of the coordination agent ions to the zirconium ions is 0.5-2.5.

Further, the modifier includes one or more of an anionic surfactant, a nonionic surfactant, polyethylene glycol, carboxylic acid and salts thereof, and a carboxymethylated fatty alcohol ethoxylated compound type surfactant.

According to a third aspect of the present invention, a catalyst system is provided, the catalyst system including the cerium-zirconium-based composite oxide provided in the first aspect of the present invention, or a cerium-zirconium-based composite oxide prepared by the preparation method provided in the second aspect of the present invention, and one or more of alumina, transition metals, precious metals, and carriers.

According to a fourth aspect of the present invention, a catalytic converter is provided for purifying tail gas by using the catalyst system provided in the third aspect of the present invention.

According to a fifth aspect of the present invention, application of the catalyst system as provided in the third aspect of the present invention, or the catalytic converter provided in the fourth aspect of the present invention in motor vehicle exhaust purification, industrial waste gas treatment or catalytic combustion is provided.

To sum up, the present invention provides a cerium-zirconium-based composite oxide with gradient distribution of elements and a preparation method thereof, a catalyst system using the composite oxide, a catalytic converter for purifying waste gas by using the catalyst system, and application of the catalyst system or the catalytic converter in motor vehicle exhaust purification, industrial waste gas treatment or catalytic combustion. In the present invention, the cerium-zirconium-based composite oxide with gradient distribution of elements is prepared by a step-by-step precipitation method, where the zirconium-rich component is precipitated first, which can form a crystal structure and grain accumulation structure with high thermal stability, retard the segregation of zirconium on the surface after high-temperature treatment, and reduce the migration of elements between grains; and the cerium-rich component is precipitated later, which increases the content of cerium on the surface layer of grains, improves the utilization of cerium, and improves the oxygen storage capacity and the oxygen storage and release rate. The composite oxide prepared by the method has both high thermal stability and high oxygen storage and release performance, so as to meet the requirements of catalysts containing the cerium-zirconium-based composite oxide for the thermal stability and oxygen storage and release performance of the cerium-zirconium-based composite oxide after long-term use.

**BRIEF DESCRIPTION OF THE DRAWINGS**

FIG. 1 is a schematic flowchart of a preparation method of a cerium-zirconium-based composite oxide with gradient distribution of elements according to the present invention;

FIG. 2 is a typical HAADF-STEM-EDS diagram of the cerium-zirconium-based composite oxide with gradient distribution of elements according to the present invention; and

**DETAILED DESCRIPTION OF THE DISCLOSURE**

In order to make the objectives, technical solutions and advantages of the present invention clearer, the present invention is further described in detail below in combination with specific embodiments and the accompanying drawings. It should be understood that these descriptions are exemplary only and are not intended to limit the scope of the present invention. In addition, descriptions on well-known structures and technologies are omitted below in order to avoid unnecessarily obscuring the concept of the present invention.

The present invention measures various physical properties using the following methods:

(1) Specific surface area, pore size and pore volume

According to the BET method, the specific surface area, pore size and pore volume were measured using a specific surface and pore size analyzer (Quadrasorb Evo).

(2) Static oxygen storage capacity (OSC)

According to an isothermal oxygen titration method, the oxygen storage capacity was measured using a chemical adsorption instrument (ChemBET Pulsar TPR/TPD). More specifically, 0.03 g of powder was sufficiently reduced by heating to 800°C in a 5% hydrogen/argon gas stream and holding for 60 minutes. The powder was cooled to 500°C in helium. After the temperature was stable, oxygen pulse titration was carried out until saturation, and the static oxygen storage capacity was calculated from the amount of oxygen absorbed.

(3) Gradient distribution of elements

The gradient distribution of elements was analyzed by line scanning and surface scanning of X-ray fluorescence spectroscopy (XRF), X-ray photoelectron spectroscopy (XPS), and spherical aberration corrected high-angle annular dark field scanning transmission electron spectroscopy (HAADF-STEM-EDS). The content of elements in the whole material can be obtained by XRF analysis, the content and proportion of elements on the surface of grains can be obtained by XPS analysis, and the overall distribution of elements in the radial direction of grains can be obtained by HAADF-STEM-EDS analysis.

A first embodiment of the present invention provides a cerium-zirconium-based composite oxide with gradient distribution of elements. The composite oxide includes a cerium element and a zirconium element, and the cerium element and the zirconium element have a gradient distribution from inside to outside in grains, where the gradient distribution indicates that the content of cerium oxide on a grain surface of the composite oxide is higher than that in the overall composite oxide, the content of zirconium oxide on the grain surface is lower than that in the overall composite oxide, the content of cerium increases gradually from inside to outside in the radial direction of grains, and the content of zirconium decreases gradually from inside to outside in the radial direction of grains. The thermal stability of the zirconium-rich component is better than that of the cerium-rich component, while the oxygen storage and release performance of the cerium-rich component is better than that of the zirconium-rich component, and in practical use, the oxygen storage and release components of the cerium-zirconium-based composite oxide are mainly distributed in the surface layer of grains, so the structure of the composite oxide is designed to be gradient distribution, which can make the oxide have both high-temperature thermal stability and high oxygen storage and release performance.

Further, the composite oxide includes the following terms represented as oxides:

10%-80% by mole of cerium oxide, preferably 30%-60% by mole of cerium oxide;

15%-80% by mole of zirconium oxide, preferably 30%-60% by mole of zirconium oxide;

and 0%-20% by mole of other oxides.

The other oxides refer to one or a combination of more than one of rare earth elements except cerium and non-rare earth metal elements except zirconium, the content of the other oxides in the composite oxide is 0%-20%, preferably 2%-15% by mole, and the content of oxides of the rare earth elements except cerium in the other oxides is 0%-100%, preferably 70%-100% by mole. The zirconium oxide may be doped with a hafnium oxide, and the content of the hafnium oxide in the zirconium oxide is 0.5%-2% by mole.

The rare earth elements except cerium and the non-rare earth metal elements except zirconium include at least one or a combination of more than one of lanthanum, praseodymium, neodymium, samarium, europium, gadolinium, terbium, dysprosium, holmium, erbium, thulium, ytterbium, lutetium, scandium, yttrium, hafnium, aluminum, barium, manganese, and copper, preferably one or a combination of more than one of lanthanum, praseodymium, neodymium, europium, yttrium, hafnium, aluminum and manganese.

Further, the gradient distribution further includes a gradient distribution of one or more elements among the rare earth elements except cerium and the non-rare earth metal elements except zirconium, and this gradient distribution indicates that the content of elements decreases or increases gradually from inside to outside in the radial direction of grains.

Further, the rare earth elements except cerium and the non-rare earth metal elements except zirconium are one or a combination of more than one of lanthanum, praseodymium, neodymium, europium, yttrium, hafnium, aluminum and manganese.

The composite oxide has excellent specific surface area performance: the specific surface area is 55-65 $m^2/g$ after heat treatment at 1000°C in air for 4 hours; and the specific surface area is 35-55 $m^2/g$ after heat treatment at 1100°C in air for 4 hours.

The composite oxide has pores of 2 nm-100 nm, a total pore volume between 0.1 mL/g and 0.5 mL/g, and a static oxygen storage capacity of more than or equal to 500 $\mu$mol $O_2/g$. After calcination at 1100°C in air for 4 hours, the composite oxide has pores of 10 nm-30 nm, a total pore volume between 0.03 mL/g and 0.2 mL/g, and a static oxygen storage capacity of more than or equal to 400 $\mu$mol $O_2/g$.

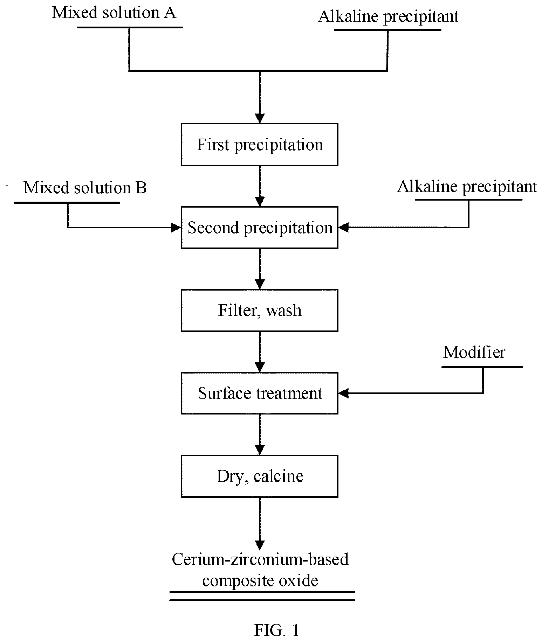

A second embodiment of the present invention provides a preparation method of the cerium-zirconium-based composite oxide with gradient distribution of elements. The preparation method is a step-by-step precipitation method, the schematic flowchart of the method is shown in FIG. 1, and the method includes the following steps:

(a) First precipitation step: an alkaline matter is mixed with a mixed solution A including a cerium salt and a zirconium salt, or a cerium salt, a zirconium salt and one or more metal salts of optional rare earth salts except cerium and non-rare earth metal salts except zirconium, followed by stirring and reacting to obtain a slurry containing a precipitate of the above metals. The zirconium in the mixed solution A is more than 50%, preferably 60%-80%, of the total zirconium by mole.

(b) Second precipitation step: a mixed solution B including the cerium salt and the zirconium salt, or the cerium salt, the zirconium salt and one or more metal salts of the optional rare earth salts except cerium and non-rare earth metal salts except zirconium, at the same time adding the alkaline matter are added to the slurry for precipitation, followed by filtering, washing, and adding water to adjust the slurry to obtain a precipitate slurry containing cerium and zirconium, or cerium, zirconium and other metals. The cerium in the mixed solution B is more than 50%, preferably 60%-80%, of the total cerium by mole.

(c) The slurry is heated, a modifier is added to the slurry, the slurry is filtered to obtain a cerium-zirconium-based composite precipitate, and the composite precipitate is calcined at 600°C-950°C to obtain the cerium-zirconium-based composite oxide.

In the embodiment of the present invention, the composite oxide is prepared by a step-by-step precipitation method, where the zirconium-rich component is precipitated first, which can form a crystal structure and grain accumulation structure with high thermal stability, retard the segregation of zirconium on the surface after high-temperature treatment, and reduce the migration of elements between grains; and the cerium-rich component is precipitated later, which increases the content of cerium on the surface layer of grains, improves the utilization of cerium, and improves the oxygen storage capacity and the oxygen storage and release rate. Therefore, the composite oxide prepared by the method has both high thermal stability and high oxygen storage and release performance, so as to meet the requirements of catalysts containing the cerium-zirconium-based composite oxide for the thermal stability and oxygen storage and release performance of the cerium-zirconium-based composite oxide after long-term use.

Further, the salts except zirconium in the mixed solution A and the mixed solution B are one or a combination of more than one of nitrate, chloride, sulfate, and acetate; the zirconium salt in the mixed solution A and the mixed solution B is one or a combination of more than one of zirconium oxynitrate, zirconium oxysulfate, zirconium oxychloride, and zirconium acetate; and the alkaline matter is one or a combination of more than one of sodium hydroxide, ammonium hydroxide, potassium hydroxide, urea, ammonium bicarbonate, sodium carbonate, and sodium bicarbonate.

Further, the mixed solution A and the mixed solution B each contain 0.2 mole to 3 moles of coordination agent ions per mole of the zirconium element, and preferably the ratio of the coordination agent ions to zirconium ions is between 0.5 and 2.5. Preferably, the coordination agent ions may be sulfate anions ( $SO_4^{2-}$ ), and the sulfate anions ( $SO_4^{2-}$ ) may be provided by adding sulfuric acid or sulfate to the mixed solution A and the mixed solution B.

Further, the amount of the alkaline matter in the first precipitation step is 0.8-1.5 times the theoretical amount required for cation precipitation, and the pH value in the second precipitation step needs to be controlled within a range of 6-12.

Further, the modifier includes one or more of an anionic surfactant, a nonionic surfactant, polyethylene glycol, carboxylic acid and salts thereof, and a carboxymethylated fatty alcohol ethoxylated compound type surfactant.

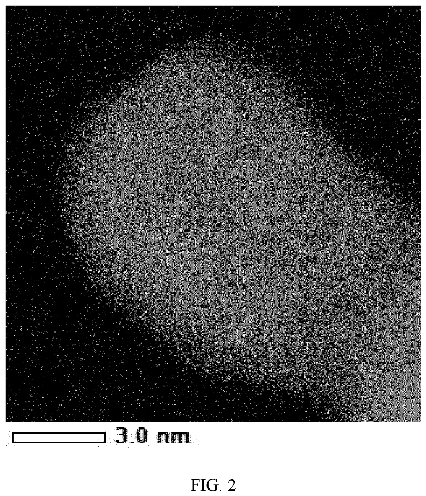

FIG. 2 is a typical spherical aberration corrected high-angle annular dark field scanning transmission electron spectroscopy (HAADF-STEM-EDS) diagram of the cerium-zirconium-based composite oxide with gradient distribution of elements according to the present invention, which shows the element distribution of a grain. Red dots represent zirconium signals, and green dots represent cerium signals. As can be seen from FIG. 2, the green signals are enriched on the surface of the grain, while the red signals are enriched inside the grain, showing that the contents of cerium and zirconium elements are different inside the grain and on the surface of the grain, the content of cerium increases from inside to outside, and the content of zirconium decreases from inside to outside. This indicates that a cerium-zirconium-based composite oxide with gradient distribution of elements is synthesized by a step-by-step precipitation method.

A third embodiment of the present invention provides a catalyst system. The catalyst system includes the cerium-zirconium-based composite oxide provided in the first embodiment of the present invention, or a cerium-zirconium-based composite oxide prepared by the preparation method provided in the second embodiment of the present invention, and one or more of alumina, transition metals, precious metals, and carriers.

A fourth embodiment of the present invention provides a catalytic converter for purifying waste gas by using the catalyst system provided in the third embodiment.

A fifth embodiment of the present invention provides application of the catalyst system as provided in the third embodiment of the present invention, or the catalytic converter provided in the fourth embodiment in motor vehicle exhaust purification, industrial waste gas treatment or catalytic combustion.

The present invention is further explained below by specific examples.

Comparative Example 1:

This comparative example relates to the preparation of a composite oxide of cerium oxide, zirconium oxide and lanthanum oxide based on mole fractions of the oxides, where the mole fraction ratio of cerium oxide, zirconium oxide and lanthanum oxide is 4: 5: 1.

A mixed solution containing cerium chloride, zirconium oxychloride and lanthanum chloride was prepared in advance. The mixed solution was added to excess sodium hydroxide for precipitation, and the precipitate was filtered and washed. The obtained filter cake was slurried and heated, and CTAB was added thereto, followed by stirring for 1 hour and then filtration and washing. The product was calcined at 800°C for 3 hours to obtain a cerium-zirconium-based composite oxide with the components. After calcination at 1100°C for 4 hours, the composite oxide had a specific surface area of 15.6 m$^2$/g, a pore volume of 0.028 mL/g, a pore size of 2-20 nm, and an oxygen storage capacity of 355 $\mu$mol O$_2$/g.

Comparative Example 2:

This comparative example relates to the preparation of a composite oxide of cerium oxide, zirconium oxide and lanthanum oxide based on mole fractions of the oxides, where the mole fraction ratio of cerium oxide, zirconium oxide and lanthanum oxide is 4: 5: 1.

Two chloride solutions were prepared in advance, one was a mixed solution A containing cerium chloride and zirconium oxychloride, and the other was a mixed solution B containing lanthanum chloride. Stoichiometric excess sodium hydroxide relative to cations to be precipitated was injected into a reactor. The solution A was injected into the reactor within 45 minutes, and the solution B was injected into the reactor within 15 minutes to obtain precipitate for hydrothermal treatment. Lauric acid was added to the obtained suspension, followed by stirring for 1 hour and then filtration and washing. The product was calcined at 800°C for 3 hours to obtain a cerium-zirconium-based composite oxide with the components. After calcination at 1100°C for 4 hours, the composite oxide had a specific surface area of

20.8 m$^2$/g, a pore volume of 0.025 mL/g, a pore size of 2-10 nm, and an oxygen storage capacity of 380 $\mu$mol O$_2$/g.

Comparative Example 3:

This comparative example relates to the preparation of a composite oxide of cerium oxide, zirconium oxide and lanthanum oxide based on mole fractions of the oxides, where the mole fraction ratio of cerium oxide, zirconium oxide and lanthanum oxide is 3: 6: 1.

Two nitrate solutions were prepared in advance, one was a mixed solution A containing zirconium oxychloride and lanthanum chloride, and the other was a solution B containing cerium chloride. The mixed solution A was added to excess sodium hydroxide, and the precipitate was filtered and washed to obtain a composite hydroxide containing zirconium and lanthanum. The hydroxide was dispersed in water, the solution B was added thereto, then excess ammonia was added, and the precipitate was filtered and washed to obtain a composite hydroxide containing cerium, zirconium and lanthanum. The composite hydroxide was calcined at 800°C for 3 hours to obtain a cerium-zirconium-based composite oxide with the components. After calcination at 1100°C for 4 hours, the composite oxide had a specific surface area of 21.9 m$^2$/g, a pore volume of 0.033 mL/g, a pore size of 2-25 nm, and an oxygen storage capacity of 430 $\mu$mol O$_2$/g.

Example 1:

This example relates to the preparation of a composite oxide containing 50 mol% of cerium oxide and 50 mol% of zirconium oxide based on mole fractions of the oxides.

Two mixed chloride solutions were prepared in advance, where one was a mixed chloride solution A containing 22 mol% of cerium and 28 mol% of zirconium based on the total amount. The other was a mixed chloride solution B containing the remaining cerium and zirconium in the designed partition. The mixed solution A was added to a proper amount of sodium hydroxide for precipitation. The mixed solution B was then added to the mixed solution A, and a sodium hydroxide solution was added at the same time for precipitation, where the precipitation process was controlled at pH=9. The precipitate was filtered and washed to obtain a composite hydroxide precipitate containing cerium and zirconium, or cerium, zirconium and one or more metals of optional rare earth salts except Ce and non-rare earth metal salts except zirconium. The obtained precipitate was added with water for slurrying, and the slurry was heated, added with a modifier, stirred continuously for a period of time, and then filtered. The obtained filter cake was calcined at optional 600°C for 3 hours to obtain a cerium-zirconium-based composite oxide with the components. After calcination at 1100°C for 4 hours, the composite oxide had a specific surface area of 36.2 m$^2$/g, a pore volume of 0.038 mL/g, a pore size of 10-30 nm, and an oxygen storage capacity of 521 $\mu$mol O$_2$/g.

Examples 2-11:

Unless otherwise pointed out below, these examples were carried out in the same manner as that in Example 1. Specific parameters in the examples were shown in Table 1.

These examples relate to the preparation of a composite oxide containing cerium oxide and zirconium oxide, or cerium oxide, zirconium oxide and one or a combination of more than one of rare earth elements (RE) except cerium (Ce) and non-rare earth metal elements except zirconium (Zr) based on mole fractions of the oxides. The composite oxide includes the following items represented as oxides:

10%-80% by mole of cerium oxide;

15%-80% by mole of zirconium oxide; and

0%-20% by mole of other oxides.

Two mixed chloride salt solutions were prepared in advance. One was a mixed solution A containing a cerium salt and a zirconium salt, or a cerium salt, a zirconium salt and one or more metal salts of optional rare earth salts except cerium (Ce) and non-rare earth metal salts except zirconium (Zr), where the zirconium was more than 50 mol% of the total zirconium. The other was a mixed solution B containing the cerium salt and zirconium salt, or the cerium salt and zirconium salt and one or more metal salts of optional rare earth salts except Ce and non-rare earth metal salts except zirconium remaining in the designed partition, where the cerium was more than 50 mol% of the total cerium. The mixed solution A was added to a proper amount of alkaline matter for precipitation. The mixed solution B was then added to the mixed solution A, and an alkaline matter was added at the same time for precipitation. The precipitate was filtered and washed to obtain a composite precipitate containing cerium and zirconium, or cerium, zirconium and one or more metals of optional rare earth salts except Ce and non-rare earth metal salts except zirconium. The obtained precipitate was added with water for slurrying, and the slurry was heated, added with a modifier, stirred continuously for a period of time, and then filtered. The obtained filter cake was calcined at optional 600-950°C for 3 hours to obtain a cerium-zirconium-based composite oxide with the components. After calcination at 1100°C for 4 hours, the composite oxide had a specific surface area of 35-55 m²/g, a pore volume of 0.03-0.2 mL/g, a pore size of 10-30 nm, and an oxygen storage capacity of 400 $\mu$mol O$_2$/g.

By comparing the examples and comparative examples provided by the present invention, it can be seen that the specific surface area, pore volume and oxygen storage capacity of the cerium-zirconium-based composite oxide synthesized by the present invention after aging were superior to those of the comparative examples, and the pore size distribution after aging was concentrated in 10-30 nm, which was more beneficial to the exertion of promoting catalyt performance. Specific performance contrasts were shown in Table 2.

Table 1

| Exampl e | Raw material | | | Process | |
|---|---|---|---|---|---|
| | Component (mole fractions of elements) | Type of metal salt | Alkaline precipitant | First precipitation component | Second precipitation component |
| 1 | Ce50Zr50 | Chloride | Sodium hydroxide | Ce22Zr28 | Ce28Zr22 |
| 2 | Ce50Zr50 | Chloride | Ammonium hydroxide | Ce22Zr28 | Ce28Zr22 |
| 3 | Ce50Zr50 | Nitrate | Sodium hydroxide | Ce18Zr32 | Ce32Zr18 |
| 4 | Ce48Zr48La4 | Chloride | Sodium hydroxide | Ce16Zr30 | Ce32Zr18La4 |
| 5 | Ce48Zr48La4 | Nitrate | Sodium hydroxide + ammonium hydroxide | Ce16Zr30La2 | Ce32Zr18La2 |
| 6 | Ce48Zr48La4 | Chloride | Sodium hydroxide | Ce16Zr30La4 | Ce32Zr18 |
| 7 | Ce40Zr50La5Y5 | Chloride | Sodium carbonate | Ce16Zr30 | Ce24Zr20La5Y5 |
| 8 | Ce35Zr55La5Y5 | Acetate | Sodium hydroxide | Ce16Zr30 | Ce 16Zr25La5Y5 |
| 9 | Ce50Zr45Eu5 | Chloride | Sodium hydroxide | Ce20Zr30 | Ce30Zr25Eu5 |
| 10 | Ce50Zr45Cu5 | Sulfate + chloride | Sodium hydroxide | Ce20Zr30 | Ce30Zr25Cu5 |
| 11 | Ce35Zr55La5Nd5 | Chloride | Sodium hydroxide | Ce15Zr35Nd5 | Ce20Zr20La5 |

Table 2

| Example | Fresh | | | 1000°C×4h | 1100°C×4h | | | |
|---|---|---|---|---|---|---|---|---|
| | Specific surface area m²/g | Pore volume mL/g | Oxygen storage $\mu$mol O$_2$/g | Specific surface area m²/g | Specific surface area m²/g | Pore size nm | Pore volume mL/g | Oxygen storage $\mu$mol O$_2$/g |
| Comparative Example 1 | 66.8 | - | - | - | 15.6 | 2-20 | 0.028 | 355 |

(continued)

| Example | Fresh | | | 1000°C×4h | 1100°C×4h | | | |
|---|---|---|---|---|---|---|---|---|
| | Specific surface area m²/g | Pore volume mL/g | Oxygen storage μmol O₂/g | Specific surface area m²/g | Specific surface area m²/g | Pore size nm | Pore volume mL/g | Oxygen storage μmol O₂/g |
| Comparative Example 2 | 73.4 | - | - | - | 20.8 | 2-10 | 0.025 | 380 |
| Comparative Example 3 | 76.5 | - | - | - | 21.9 | 2-25 | 0.033 | 430 |
| Example 1 | 77.1 | 0.30 | 632 | 56.3 | 36.2 | 10-30 | 0.038 | 521 |
| Example 2 | - | 0.28 | 625 | 58.2 | 38.5 | 10-30 | 0.044 | 536 |
| Example 3 | - | 0.32 | 648 | 60.5 | 40.3 | 10-30 | 0.047 | 554 |
| Example 4 | 82.6 | 0.40 | 656 | 63.8 | 42.6 | 10-30 | 0.064 | 573 |
| Example 5 | - | 0.38 | 653 | 62.1 | 41.0 | 10-30 | 0.061 | 568 |
| Example 6 | - | 0.36 | 645 | 59.3 | 39.4 | 10-30 | 0.059 | 568 |
| Example 7 | 89.3 | 0.43 | 608 | 64.2 | 42.5 | 10-30 | 0.108 | 524 |
| Example 8 | 80.2 | 0.44 | 590 | 63.5 | 43.4 | 10-30 | 0.139 | 508 |
| Example 9 | - | 0.35 | 680 | 58.6 | 38.2 | 10-30 | 0.079 | 565 |
| Example 10 | 105.8 | 0.37 | 830 | 55.7 | 36.5 | 10-30 | 0.062 | 694 |
| Example 11 | - | 0.40 | 612 | 65.6 | 42.3 | 10-30 | 0.082 | 518 |

To sum up, the present invention relates to a cerium-zirconium-based composite oxide with gradient distribution of elements and a preparation method thereof, a catalyst system using the composite oxide, a catalytic converter for purifying waste gas by using the catalyst system, and application of the catalyst system or the catalytic converter in motor vehicle exhaust purification, industrial waste gas treatment or catalytic combustion. In the present invention, the cerium-zirconium-based composite oxide with gradient distribution of elements is prepared by a step-by-step precipitation method, where the zirconium-rich component is precipitated first, which can form a crystal structure and grain accumulation structure with high thermal stability, retard the segregation of zirconium on the surface after high-temperature treatment, and reduce the migration of elements between grains; and the cerium-rich component is precipitated later, which can increase the content of cerium on the surface layer of grains, improve the utilization of cerium, and improve the oxygen storage capacity and the oxygen storage and release rate. The composite oxide prepared by the method has both high thermal stability and high oxygen storage and release performance, so as to meet the requirements of catalysts containing the cerium-zirconium-based composite oxide for the thermal stability and oxygen storage and release performance of the cerium-zirconium-based composite oxide after long-term use.

It should be understood that the above-mentioned specific embodiments of the present invention are merely used for illustrating or interpreting the principle of the present invention, rather than limiting the present invention. Therefore, any modification, equivalent substitution or improvement made without departing from the spirit and scope of the present invention shall fall into the protection scope of the present invention. Moreover, the appended claims of the present invention are intended to cover all variations and modifications falling within the scope and boundary of the appended claims or within the equivalent forms of such scope and boundary.

## Claims

1. A cerium-zirconium-based composite oxide with gradient distribution of elements, wherein the composite oxide comprises a cerium element and a zirconium element, and the cerium element and the zirconium element have a gradient distribution from inside to outside in grains.

2. The cerium-zirconium-based composite oxide according to claim 1, wherein the content of cerium oxide on a grain surface of the composite oxide is higher than that in the overall composite oxide, the content of zirconium oxide on the grain surface is lower than that in the overall composite oxide, the content of cerium increases gradually from inside to outside along the radial direction of grains, and the content of zirconium decreases gradually from inside to outside along the radial direction of grains.

3. The cerium-zirconium-based composite oxide according to claim 1 or 2, wherein the composite oxide comprises the following terms represented as oxides:

> 10%-80% by mole of cerium oxide;
> 15%-80% by mole of zirconium oxide; and
> 0%-20% by mole of other oxides.

4. The cerium-zirconium-based composite oxide according to claim 1 or 2, wherein the composite oxide comprises the following terms represented as oxides:

> 30%-60% by mole of cerium oxide; and
> 30%-60% by mole of zirconium oxide.

5. The cerium-zirconium-based composite oxide according to claim 3 , wherein the other oxides are one or a combination of more than one of rare earth elements except cerium and non-rare earth metal elements except zirconium, the content of the other oxides in the composite oxide is 2%-15% by mole, and the content of oxides of the rare earth elements except cerium in the other oxides is 70%-100% by mole.

6. The cerium-zirconium-based composite oxide according to claim 1 or 2, wherein the composite oxide contains a hafnium oxide, and the content of the hafnium oxide is 0.05%-2% by mole.

7. The cerium-zirconium-based composite oxide according to claim 5, wherein the rare earth elements except cerium and the non-rare earth metal elements except zirconium comprise at least one or a combination of more than one of lanthanum, praseodymium, neodymium, samarium, europium, gadolinium, terbium, dysprosium, holmium, erbium, thulium, ytterbium, lutetium, scandium, yttrium, hafnium, aluminum, barium, manganese, and copper.

8. The cerium-zirconium-based composite oxide according to claim 5, wherein the rare earth elements except cerium and the non-rare earth metal elements except zirconium are one or a combination of more than one of lanthanum, praseodymium, neodymium, europium, yttrium, hafnium, aluminum and manganese.

9. The cerium-zirconium-based composite oxide according to claim 1 or 2, wherein the gradient distribution further comprises a gradient distribution of one or more elements among the rare earth elements except cerium and/or the non-rare earth elements except zirconium, and this gradient distribution indicates that the content of elements decreases or increases gradually from inside to outside in the radial direction of grains.

10. The cerium-zirconium-based composite oxide according to claim 1 or 2, wherein distribution further comprises a gradient distribution of the rare earth elements except cerium, in which the content of elements increases gradually from inside to outside in the radial direction of grains.

11. The cerium-zirconium-based composite oxide according to claim 9, wherein the rare earth elements except cerium and the non-rare earth metal elements except zirconium are one or a combination of more than one of lanthanum, praseodymium, neodymium, europium, yttrium, hafnium, aluminum and manganese.

12. The cerium-zirconium-based composite oxide according to claim 1 or 2, wherein the composite oxide has:

> a specific surface area of 55-65 $m^2/g$ after heat treatment at 1000°C in air for 4 hours; and
> a specific surface area of 35-55 $m^2/g$ after heat treatment at 1 100°C in air for 4 hours.

13. The cerium-zirconium-based composite oxide according to claim 1 or 2, wherein the composite oxide has pores of 2 nm-100 nm, a total pore volume between 0.1 mL/g and 0.5 mL/g, and a static oxygen storage capacity of more than or equal to 500 $\mu$mol $O_2/g$.

14. The cerium-zirconium-based composite oxide according to claim 1 or 2, wherein after calcination at 1100°C in air for 4 hours, the composite oxide has pores of 10 nm-30 nm, a total pore volume between 0.03 mL/g and 0.2 mL/g, and a static oxygen storage capacity of more than or equal to 400 $\mu$mol $O_2$/g.

15. A preparation method of the cerium-zirconium-based composite oxide with gradient distribution of elements according, wherein the preparation method is a step-by-step precipitation method, and comprises the following steps:

(a) first precipitation step: mixing an alkaline matter with a mixed solution A comprising a cerium salt and a zirconium salt, or a cerium salt, a zirconium salt and one or more metal salts of optional rare earth salts except cerium and non-rare earth metal salts except zirconium, stirring and reacting to obtain a slurry containing a precipitate of the above elements;

(b) second precipitation step: adding a mixed solution B comprising the cerium salt and the zirconium salt, or the cerium salt, the zirconium salt and one or more metal salts of the optional rare earth salts except cerium and non-rare earth metal salts except zirconium, and the alkaline matter to the slurry for precipitation, filtering, washing, and adding water to adjust the slurry to obtain a precipitate slurry containing cerium and zirconium, or cerium, zirconium and other elements; and

(c) heating the slurry obtained in step (b), adding a modifier to the slurry, filtering to obtain a cerium-zirconium-based composite precipitate, and calcining at 600°C-950°C to obtain the cerium-zirconium-based composite oxide.

16. The method according to claim 15, wherein the zirconium in the mixture A is more than 50% of the total zirconium content and the cerium in the mixture B is more than 50% of the total cerium content.

17. The method according to claim 15, wherein the zirconium in the mixed solution A is 60%-80% by mole of the total zirconium content, and the cerium in the mixed solution B is 60%-80% by mole of the total cerium content.

18. The method according to claim 15, wherein the salts except zirconium in the mixed solution A and the mixed solution B are one or a combination of more than one of nitrate, chloride, sulfate, and acetate.

19. The method according to claim 15, wherein the zirconium salt in the mixed solution A and the mixed solution B is one or a combination of more than one of zirconium oxynitrate, zirconium oxysulfate, zirconium oxychloride, and zirconium acetate.

20. The method according to claim 15, wherein the alkaline matter is one or a combination of more than one of sodium hydroxide, ammonium hydroxide, potassium hydroxide, urea, ammonium bicarbonate, sodium carbonate, and sodium bicarbonate.

21. The method according to claim 15, wherein the mixed solution A and the mixed solution B each contain 0.2 mole to 3 moles of coordination agent ions per mole of the zirconium element, and the coordination agent ions are sulfate anions, which are provided by adding sulfuric acid or sulfate to the mixed solution A and the mixed solution B.

22. The method according to claim 15, wherein the amount of the alkaline matter in the first precipitation step is 0.8-1.5 times the theoretical amount required for cation precipitation, and the pH value in the second precipitation step needs to be controlled within a preset range.

23. The method according to claim 21, wherein the ratio of the coordination agent ions to the zirconium ions is 0.5-2.5.

24. The method according to claim 15, wherein the modifier comprises one or more of an anionic surfactant, a nonionic surfactant, polyethylene glycol, carboxylic acid and salts thereof, and a carboxymethylated fatty alcohol ethoxylated compound type surfactant.

25. A catalyst system, wherein the catalyst system comprises the cerium-zirconium-based composite oxide according to any one of claims 1-14, or a cerium-zirconium-base composite oxide prepared by the preparation method of claim 15 -24, and one or more of alumina, transition metals, precious metals, and carriers.

26. A catalytic converter for purifying tail gas by using the catalyst system according to claim 25.

27. Application of the catalyst system according to claim 25, or the catalytic converter according to claim 26 in motor vehicle exhaust purification, industrial waste gas treatment or catalytic combustion.

Mixed solution A                    Alkaline precipitant

First precipitation

Mixed solution B                    Alkaline precipitant

Second precipitation

Filter, wash

Modifier

Surface treatment

Dry, calcine

Cerium-zirconium-based
composite oxide

FIG. 1

FIG. 2

## INTERNATIONAL SEARCH REPORT

| | International application No. |
|---|---|
| | **PCT/CN2021/114932** |

**A. CLASSIFICATION OF SUBJECT MATTER**

B01J 23/10(2006.01)i; B01D 53/86(2006.01)i; B01D 53/94(2006.01)n; B01J 23/00(2006.01)n; F23G 7/07(2006.01)n

According to International Patent Classification (IPC) or to both national classification and IPC

**B. FIELDS SEARCHED**

Minimum documentation searched (classification system followed by classification symbols)

B01J23/-、; B01D53/-、; F23G7/-

Documentation searched other than minimum documentation to the extent that such documents are included in the fields searched

Electronic data base consulted during the international search (name of data base and, where practicable, search terms used)

CNABS; CNTXT; VEN; WEB OF SCIENCE: 铈, Ce, 锆, Zr, ZrO2, 层, 核, 梯度, 递增, 递减, 逐级, 增加, 多级, 减小, 变大, 富铈, 富锆, 内层, 外层, 里层, 第二层, 分层, 逐层, 逐级, 核, 壳, 上层, 下层, 表层, 中间层, 双层, cerium, zirconium, zirconium+, decrease, lessen, lower, reduction, eliminat+, diminish, less, drop, layer?, ceriia, shell???, outer, bottom, lower, upper, surround +, double?, cover, second, inner, inside, internal, interior, inward, central, center

**C. DOCUMENTS CONSIDERED TO BE RELEVANT**

| Category* | Citation of document, with indication, where appropriate, of the relevant passages | Relevant to claim No. |
|---|---|---|
| PX | CN 112076740 A (GRIREM ADVANCED MATERIALS CO., LTD.; HEBEI XIONGAN RARE EARTH FUNCTIONAL MATERIALS INNOVATION CENTER CO., LTD.; YOUYAN RARE EARTH HIGH TECHNOLOGY CO., LTD.) 15 December 2020 (2020-12-15) claims 1-27 | 1-27 |
| X | CN 109772288 A (SHANGDONG SINOCERA FUNCTIONAL MATERIAL CO., LTD.) 21 May 2019 (2019-05-21) claims 1-5, description, paragraphs 1, 3, 5-35, embodiment 1, testing example 1 | 1-14, 25-27 |
| Y | CN 109772288 A (SHANGDONG SINOCERA FUNCTIONAL MATERIAL CO., LTD.) 21 May 2019 (2019-05-21) claims 1-5, description paragraphs 1, 3, 5-35 | 15-24 |
| Y | CN 101249438 A (WUXI WEIFU ENVIRONMENT PROTECTION ACTIVATOR CO., LTD.) 27 August 2008 (2008-08-27) claims 1-5 | 15-24 |
| X | JP 2003299967 A (TOYOTA MOTOR CORP. et al.) 21 October 2003 (2003-10-21) description paragraphs 7-21, embodiments 1-2 | 1-27 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 November 2021** | **25 November 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/114932**

### C. DOCUMENTS CONSIDERED TO BE RELEVANT

| Category* | Citation of document, with indication, where appropriate, of the relevant passages | Relevant to claim No. |
|---|---|---|
| X | CN 102580717 A (UNIVERSITY OF JINAN) 18 July 2012 (2012-07-18) description paragraphs 8-18, claims 1-5 | 1-24 |
| A | CN 107107037 A (UMICORE AG & CO. KG) 29 August 2017 (2017-08-29) entire document | 1-27 |

Form PCT/ISA/210 (second sheet) (January 2015)

## INTERNATIONAL SEARCH REPORT
### Information on patent family members

International application No.

**PCT/CN2021/114932**

| Patent document cited in search report | | | Publication date (day/month/year) | Patent family member(s) | | | Publication date (day/month/year) |
|---|---|---|---|---|---|---|---|
| CN | 112076740 | A | 15 December 2020 | None | | | |
| CN | 109772288 | A | 21 May 2019 | None | | | |
| CN | 101249438 | A | 27 August 2008 | CN | 101249438 | B | 17 August 2011 |
| | | | | US | 2012172212 | A1 | 05 July 2012 |
| JP | 2003299967 | A | 21 October 2003 | None | | | |
| CN | 102580717 | A | 18 July 2012 | CN | 102580717 | B | 05 February 2014 |
| CN | 107107037 | A | 29 August 2017 | JP | 6678669 | B2 | 08 April 2020 |
| | | | | US | 10413886 | B2 | 17 September 2019 |
| | | | | EP | 3247493 | B1 | 27 May 2020 |
| | | | | JP | 2018508337 | A | 29 March 2018 |
| | | | | EP | 3045226 | A1 | 20 July 2016 |
| | | | | PL | 3247493 | T3 | 16 November 2020 |
| | | | | CN | 111514891 | A | 11 August 2020 |
| | | | | WO | 2016116356 | A1 | 28 July 2016 |
| | | | | KR | 20170106419 | A | 20 September 2017 |
| | | | | EP | 3247493 | A1 | 29 November 2017 |
| | | | | BR | 112017014624 | A2 | 06 February 2018 |
| | | | | DE | 202016008848 | U1 | 10 February 2020 |
| | | | | CN | 107107037 | B | 04 August 2020 |
| | | | | US | 2017368536 | A1 | 28 December 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101091914 B
- CN 102883808 A
- CN 103962120 A
- CN 107427822 A
- CN 103191711 A